# EUROPÄISCHE PATENTSCHRIFT

(11) **EP 0 962 169 B1**
(45) Veröffentlichungstag und Bekanntmachung des Hinweises auf die Patenterteilung: **15.02.2006**
(21) Anmeldenummer: 98120965.3
(22) Anmeldetag: 05.11.1998
(51) Int. Cl.: A47B 81/06, A47B 51/00

(54) **Fernsehschrank für Wohnmobile und Wohnwagen**
Television cupboard for mobile homes and caravans
Armoire de télévision pour des caravanes

(30) Priorität: 30.05.1998 DE 29809775 U
(43) Veröffentlichungstag der Anmeldung: 08.12.1999
(73) Patentinhaber: Frankia Fahrzeugbau Pilote GmbH & Co oHG, 95509 Marktschorgast (DE)
(72) Erfinder: Hoang, Giam, D-95463 Bindlach (DE)
(74) Vertreter: Ernicke, Klaus Stefan

(56) Entgegenhaltungen:
- FR-A- 2 692 119
- GB-A- 866 494
- GB-A- 2 287 641
- US-A- 4 274 685
- US-A- 5 076 649

## Beschreibung

Die Erfindung betrifft einen Fernsehschrank für Wohnmobile und Wohnwagen. Aufgrund der im Wohnbereich eines Wohnmobils oder Wohnwagens - im folgenden wird vereinfachend von Wohnmobil gesprochen - in der Regel vorhandenen Fenster werden Fernsehschränke üblicherweise an einer erhöhten, sich oberhalb der Fenster befindlichen Position, beispielsweise an einer Wohnmobilwand befestigt. Eine fernsehschauende Person muss daher den Kopf in den Nacken legen, um den Blick steil nach oben richten zu können. Dies ist auf Dauer unbequem und ermüdend.

Aus der FR 2 692 119 A1 ist ein Schrank bekannt, der ein kastenartiges Fach enthält, das in einem ersten Schritt horizontal und in einem zweiten Schritt vertikal verfahrbar ist. Bei einem in US 5,076,649 beschriebenen Küchenschrank ist ebenfalls ein kastenartiges Fach vorhanden. Dieses ist jedoch mit Hilfe eines Schrägauszugs höhenverstellbar.

Davon ausgehend ist es die Aufgabe der Erfindung, einen Fernsehschrank vorzuschlagen, der in dieser Hinsicht verbessert ist.

Diese Aufgabe wird nach Anspruch 1 dadurch gelöst, daß der Fernsehschrank an einer Wand und/oder an einem Möbel des Wohnmobils höhenverstellbar gelagert ist. Er kann daher bei Bedarf nach unten bewegt und in Augenhöhe des Betrachters angeordnet werden. Der Fernsehschrank enthält einen Horizontalauszug, mit dem der Fernseher aus dem Fernsehschrank herausbewegt und somit die horizontale Bewegungsstrecke bzw. die Variationsmöglichkeiten für eine Platzierung des Fernsehers erhöht wird.

Die Bewegungsrichtung der Höhenverstellung verläuft dabei schräg, d.h. die Bewegungsrichtung bildet mit der Vertikalen einen nach unten geöffneten Winkel. Durch diese Ausgestaltung ist der Höhenverstellung gleichzeitig eine Horizontalbewegung überlagert. In Wohnmobilen ist bekanntlich das Raumangebot oftmals knapp. Mit der vorgeschlagenen Ausgestaltung ist es möglich, den Fernsehschrank in einer zum Betrachter ungünstigen Position, etwa einer Raumnische unterzubringen und zum im Gebrauch in eine gut einsehbare Vertikal- und Horizontalposition zu bringen.

Bei einer bevorzugten Ausgestaltung sind seitlich am Korpus des Fernsehschrankes Teleskop-Auszugsschienen fixiert. Dabei ist es zweckmäßig, wenn der ortsfeste Abschnitt der Schienen einerseits an einer Wohnmobilwand und andererseits an der Seitenwand eines Hängeschranks montiert ist. Ein zusätzlicher Horizontalauszug ist vorhanden, mit dem der Fernseher aus dem Fernsehschrank herausbewegt und somit die horizontale Bewegungsstrecke bzw. die Variationsmöglichkeiten für eine Plazierung des Fernsehers erhöht wird. Vorzugsweise ist ein erfindungsgemäßer Fernsehschrank in eine Hängeschrankreihe des Wohnmobils integriert, wobei er zweckmäßigerweise zwischen einem Hängeschrank und einer Wohnmobilwand angeordnet ist.

Die Erfindung wird nun anhand eines in den beigefügten Zeichnungen dargestellten Ausführungsbeispieles näher erläutet. Es zeigen:

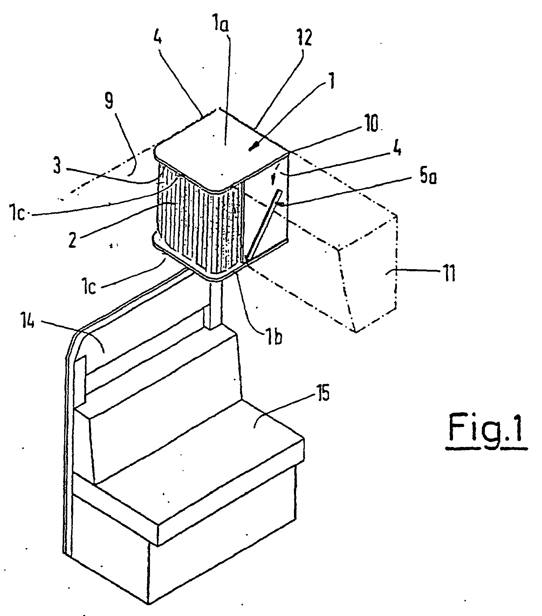

- Fig. 1: einen erfindungsgemäßen Fernsehschrank in seiner oberen Position,

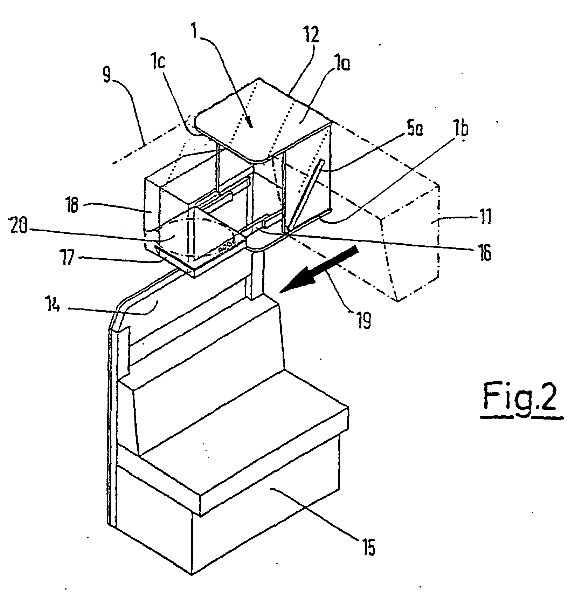

- Fig. 2: eine Abbildung entsprechend Fig. 1, bei der jedoch der Fernseher mit Hilfe eines Horizontalauszugs aus dem Fernsehschrank herausbewegt ist, und

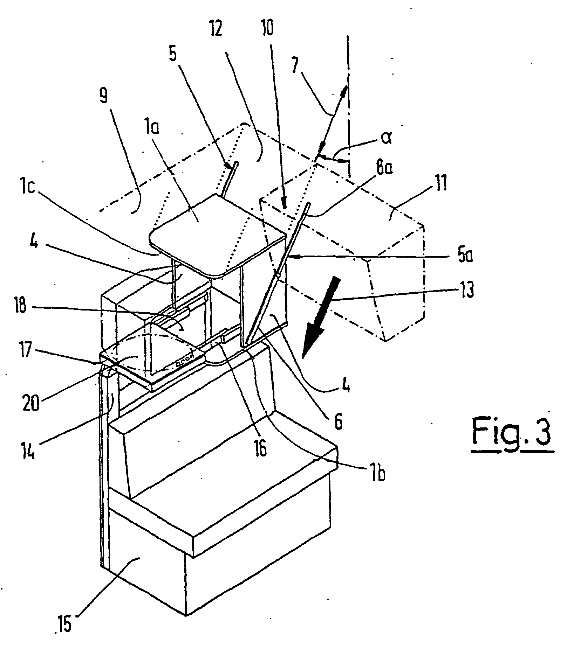

- Fig. 3: eine Abbildung, bei der sich der Fernsehschrank in seiner Gebrauchsposition befindet.

Ein erfindungsgemäßer Fernsehschrank umfaßt einen in üblicher Weise gestalteten, etwa kastenförmigen Korpus 1 mit einer von einem Schieberollo 2 verschließbaren Aufnahmeöffnung 3. Das Schieberollo ist einerseits an der Unterseite des Korpus-Oberteils 1a und andererseits an der Oberseite des Korpus-Bodens 1b geführt. Die Seitenwände 4 sind gegenüber den Vorderkanten (1c) des Oberteils 1a und des Bodens 1b zurückversetzt. An den Seitenwänden 4 des Korpus 1 ist jeweils eine Teleskopauszugsschiene 5,5a mit ihrem beweglichen Schienenabschnitt 6 befestigt. Die Teleskopauszugsschiene ist schräg angeordnet, d.h. die Bewegungsrichtung 7 des Fernsehschranks bildet mit der Vertikalen einen nach unten offenen Winkel α. Der Winkel α beträgt vorzugsweise etwa 45°. Der ortsfeste Schienenabschnitt 8 der einen Teleskopauszugsschiene 5 ist an einer Wohnmobilwand 9 befestigt. Der ortsfeste Schienenabschnitt 8a der anderen Teleskopauszugsschiene 5a ist an der Seitenwand 10 eines Hängeschranks 11 befestigt. Der Hängeschrank 11 ist an einer Wohnmobilwand 12 angeordnet, die mit der Wohnmobilwand 10 eine Raumecke bildet. Der Fernsehschrank ist in einer Hängeschrankreihe integriert und ist im Nichtgebrauchszustand somit in einer geschützten Raumnische untergebracht.

Um den Fernsehschrank in seine Gebrauchsposition zu bringen, wird er in Richtung des Pfeiles 13 nach unten bewegt. In dieser Stellung stützt er sich auf der Rückenlehne 14 einer Sitzbank 15 ab. Diese Abstützung, die auch durch ein anderes Möbel bewerkstelligt werden kann, nimmt die Last des Fernsehschranks und des sich darin befindlichen Fernsehers zu einem großen Teil auf, so daß Teleskopauszugsschienen mit entsprechend verringerter mechanischer Stabilität verwendet werden können.

Zusätzlich zum Schrägauszug ist im Korpus 1 ein Horizontalauszug 16 vorhanden, mit dem eine ein Fernsehgerät 18 aufnehmende Stützplatte 17 in Horizontalrichtung 19 aus dem Korpus 1 heraus- und wieder hineinbewegbar ist. Durch diesen Auszug und durch eine schwenkbare Anordnung des Fernsehers etwa mit Hilfe eines in der Stützplatte 17 integrierten Drehtellers 20 sind die Variationsmöglichkeiten für die Positionierung des Fernsehers 18 zusätzlich erhöht. Bei Bedarf kann der Horizontalauszug auch in der oberen Position des Korpus 1 betätigt werden, wenn im Stehen, etwa bei einer im Wohnmobil zu verrichtenden Arbeit, ferngesehen wird.

### Bezugszeichenliste

- 1: Korpus
- 1a: Korpus-Oberteil
- 1b: Korpus-Boden
- 1c: Vorderkante
- 2: Schieberollo
- 3: Aufnahmeöffnung
- 4: Seitenwand
- 5,5a: Teleskopauszugsschiene
- 6: Schienenabschnitt
- 7: Bewegungsrichtung
- 8,8a: Scheinenabschnitt
- 9: Wohnmobilwand
- 10: Seitenwand
- 11: Hängeschrank
- 12: Wohnmobilwand
- 13: Pfeil
- 14: Rückenlehne
- 15: Sitzbank
- 16: Horizontalauszug
- 17: Stützplatte
- 18: Fernsehgerät
- 19: Horizontalrichtung
- 20: Drehteller
- α: Winkel

## Patentansprüche

1. Wohnmobil oder Wohnwagen, mit einem an einer Wand und/oder einem Möbel des Wohnmobils oder des Wohnwagens bei schräg verlaufender Bewegungsrichtung höhenverstellbar gelagerten Fernsehschrank, mit einer, ein Fernsehgerät (18) aufnehmenden Stützplatte (17), **dadurch gekennzeichnet, daß** die Stützplatte mit einem Horizontalauszug (16) am Korpus 1 des Fernsehschranks in Horizontalrichtung (19) verschiebbar gelagert ist.

2. Wohnmobil oder Wohnwagen nach Anspruch 1,
**dadurch gekennzeichnet,**
**dass** in der Stützplatte (17) ein das Fernsehgerät (18) tragender Drehteller (20) integriert ist.

3. Wohnmobil oder Wohnwagen nach Anspruch 1 oder 2,
**gekennzeichnet durch**
einen Schrägauszug in Form zweier Teleskopauszugsschienen (5,5a), deren bewegliche Schienenabschnitte (6) außen an den Seitenwänden (4) des Fernsehschranks fixiert sind.

4. Wohnmobil oder Wohnwagen nach einem der vorhergehenden Ansprüche,
**dadurch gekennzeichnet,**
**dass** der Fernsehschrank in eine Hängeschrankreihe des Wohnmobils integriert ist.

5. Wohnmobil oder Wohnwagen nach einem der vorhergehenden Ansprüche,
**dadurch gekennzeichnet,**
**dass** der Fernsehschrank sich in seiner unteren Position auf einem Wohnmobilmöbel, insbesondere der Rückenlehne (14) einer Sitzbank (15) abstützt.

6. Wohnmobil oder Wohnwagen nach einem der vorhergehenden Ansprüche,
**dadurch gekennzeichnet,**
**dass** der Fernsehschrank mit einem Schieberollo (2) verschließbar ist.

7. Wohnmobil oder Wohnwagen nach Anspruch 6,
**dadurch gekennzeichnet,**
**dass** das Schieberollo (2) einerseits an der Unterseite des Korpus-Oberteils (1a) und andererseits an der Oberseite des Korpus-Bodens (1b) geführt ist.

## Claims

1. Mobile home or caravan, comprising a television cabinet which is mounted on a wall and/or a furniture item of the mobile home or caravan in such a way as to be height-adjustable with an inclined direction of movement, and comprising a support plate (17) receiving a television set (18), **characterized in that** the support plate is mounted on the body 1 of the television cabinet so that it can be displaced in the horizontal direction (19) by means of a horizontal extension means (16).

2. Mobile home or caravan according to Claim 1, **characterized in that** a turntable (20) bearing the television set (18) is integrated in the support plate (17).

3. Mobile home or caravan according to Claim 1 or 2, **characterized by** an inclined extension means in the form of two telescopic extension rails (5, 5a) whose moving rail sections (6) are fixed to the outside of the side walls (4) of the television cabinet.

4. Mobile home or caravan according to one of the preceding claims, **characterized in that** the television cabinet is integrated into a row of suspended cabinets belonging to the mobile home.

5. Mobile home or caravan according to one of the preceding claims, **characterized in that** in its lower position the television cabinet is supported on a furniture item of the mobile home, in particular the backrest (14) of a bench seat (15).

6. Mobile home or caravan according to one of the preceding claims, **characterized in that** the television cabinet can be closed by means of a sliding roller blind (2).

7. Mobile home or caravan according to Claim 6, **characterized in that** the sliding roller blind (2) is guided on the underside of the body top (1a) on the one hand and on the upper side of the body bottom (1b) on the other hand.

## Revendications

1. Mobile-home ou caravane, comprenant une armoire de télévision montée contre une paroi et/ou un meuble du mobile-home ou de la caravane, de manière réglable en hauteur dans une direction de déplacement s'étendant obliquement, avec une plaque de support (17) recevant un appareil de télévision (18), **caractérisé en ce que** la plaque de support est montée de manière déplaçable dans la direction horizontale avec un tiroir horizontal (16) sur le corps 1 de l'armoire de télévision.

2. Mobile-home ou caravane selon la revendication 1, **caractérisé en ce qu'**un plateau tournant (20) portant l'appareil de télévision (18) est intégré dans la plaque de support (17).

3. Mobile-home ou caravane selon la revendication 1 ou 2, **caractérisé par** un tiroir oblique sous forme de deux rails de sortie télescopables (5, 5a) dont les portions de rail mobiles (6) sont fixées à l'extérieur sur les parois latérales (4) de l'armoire de télévision.

4. Mobile-home ou caravane selon l'une quelconque des revendications précédentes, **caractérisé en ce que** l'armoire de télévision est intégrée dans une rangée d'étagère suspendue du mobile-home.

5. Mobile-home ou caravane selon l'une quelconque des revendications précédentes, **caractérisé en ce que** l'armoire de télévision s'appuie dans sa position inférieur sur un meuble du mobile-home, notamment sur le dossier (14) d'une banquette de sièges (15).

6. Mobile-home ou caravane selon l'une quelconque des revendications précédentes, **caractérisé en ce que** l'armoire de télévision peut être fermée avec un volet roulant (2).

7. Mobile-home ou caravane selon la revendication 6, **caractérisé en ce que** le volet roulant (2) est guidé d'une part sur le côté inférieur de la partie supérieure du corps (1a) et d'autre part sur le côté supérieur du fond du corps (1b).
